# EUROPÄISCHE PATENTSCHRIFT

(11) **EP 1 897 603 B1**
(45) Veröffentlichungstag und Bekanntmachung des Hinweises auf die Patenterteilung: **07.01.2015**
(21) Anmeldenummer: 07112387.1
(22) Anmeldetag: 12.07.2007
(51) Int. Cl.: B01D 46/24

(54) **Zusammengesetzter Wabenkörper**
Composite honeycombs
Corps en nid d'abeilles composé

(30) Priorität: 28.07.2006 DE 102006036498
(43) Veröffentlichungstag der Anmeldung: 12.03.2008
(73) Patentinhaber: Fraunhofer-Gesellschaft zur Förderung der angewandten Forschung e.V., 80686 München (DE); CleanDieselCeramics GmbH, 01277 Dresden (DE)
(72) Erfinder: Adler, Jörg, 01662 Meißen (DE); Lenk, Reinhard, 01328 Dresden (DE); Richter, Hans-Jürgen, 01257 Dresden (DE); Petasch, Uwe, 01520 Panschwitz-Kuckau (DE); Holdschuh, Claus, 91315 Höchstadt (DE); Rahn, Thomas, 97500 Ebelsbach (DE); Rembor, Hans-Jörg, 90491 Nürnberg (DE)
(74) Vertreter: Rauschenbach, Marion

(56) Entgegenhaltungen:
- EP-A1- 1 508 356
- WO-A-00/50156
- WO-A-03/053542
- US-A1- 2006 021 310

## Beschreibung

Die Erfindung bezieht sich auf das Gebiet der Keramik und betrifft einen zusammengesetzten Wabenkörper, wie er beispielsweise als Katalysator zur Reinigung von Abgasen, als Katalysatorträger und/oder als Filter, sowie als Wärmetauscher und Leichtbauelement verwendet werden kann.
Als Filter kann der erfindungsgemäße zusammengesetzte Wabenkörper speziell zur Reinigung von dieselmotorisch erzeugten Abgasen in Kraftfahrzeugen, Baumaschinen, Lokomotiven, Schiffsmotoren oder stationären Notstromaggregaten benutzt werden.

Wabenkörper (sog. Honeycombs) aus keramischen Materialien werden seit vielen Jahren in der Umwelttechnik und Automobilindustrie zur Behandlung und Reinigung von Abgasen eingesetzt. Dabei bestehen die Wabenkörper aus einer Vielzahl von langgestreckten Kanälen unterschiedlicher Querschnittsform, die durch dünne keramische Stege voneinander getrennt sind. Solche Wabenkörper werden vorzugsweise durch Extrudieren (Strangpressen) einer plastifizierten keramischen Masse durch ein Mundstück geformt, dann getrocknet und gebrannt (gesintert). Die Form der Kanäle und die äußere Form der Wabenkörper werden durch die Gestaltung des Extrudermundstücks festgelegt. Beim Extrudieren entsteht im Prinzip ein endloser Strang. Durch Abschneiden senkrecht oder schräg zur Extrusionsrichtung entsteht dann ein Wabenkörper, der beispielsweise prismatische Außenkonturen besitzt; die Grundfläche des Prismas (z.B. dreieckig, viereckig, quadratisch, sechseckig usw.) wird wie o.a. durch die Konturen des Mundstückes bestimmt.

Je nach Auswahl der keramischen Masse und der nachfolgenden Behandlungsschritte kann der Wabenkörper stofflich aus sehr unterschiedlichen keramischen Materialien bestehen, z.B. Aluminiumoxid, Cordierit, Mullit, Titanoxid, Aluminiumtitanat, Siliciumcarbid, Silicium-Siliciumcarbid, Siliciumnitrid, Aluminiumnitrid, Kohlenstoff und aus verschiedenen Mischkeramiken. Prinzipiell ist es mit diesem Verfahren aber auch möglich, Massen aus metallischen Pulvern zu extrudieren und zu sintern und damit metallische Wabenkörper, z.B. aus hochhitzebeständigen Legierungen wie Ni-Basislegierungen oder FeCrAl oder FeCrAlY herzustellen. Die Materialien können Porosität in unterschiedlicher Menge (Porenvolumen), Gestalt und Größe besitzen. Für Anwendungen als Katalysator werden spezielle Katalysatormaterialien extrudiert, z.B. TiO₂ mit WO₃ und V₂O₅ für die Entstickung von Rauch- und Abgasen (sog. DeNOx-Katalysatoren) oder Hexaaluminate für Hochtemperaturverbrennungen Oder für Anwendungen als Katalysatorträger werden die Kanalwände der Wabenkörper nachträglich mit sog. Washcoats zur Oberflächenvergrößerung beschichtet, in die wiederum katalytisch aktive Substanzen, z.B. Edelmetalle wie Pt, eingelagert werden.

Für die Abgasreinigung von z.B. lösemittelhaltigen Abgasen aus Lackierereien werden die Wabenkörper mit Adsorbentien, z.B. Zeolithen oder mit Aktivkohle, beschichtet. Für die Adsorption von CO2 aus Verbrennungsgasen können z.B. Lithiumsilikate verwendet werden. Durch wechselnde Durchströmung mit Abgas und einem Gas zur Regeneration werden die schädlichen Bestandteile aus dem Abgas entfernt und im Regenerationsgas konzentriert. In ähnlicher Weise funktionieren Wärmetauscher, bei denen die Wabenkörper zuerst mit einem heißen Gas erhitzt werden und danach durch Umschalten auf ein kaltes Gas dieses bei Durchströmung aufgeheizt wird.

In einer speziellen Ausgestaltung werden die Kanalwandungen der Wabenkörper aus einem Material mit offener, d.h. durchgängiger Porosität hergestellt, und die Kanäle wechselseitig an beiden Stirnseiten einige Millimeter tief verschlossen, in der Form, dass jeder Kanal nur auf einer Seite verschlossen ist und an einer Stirnseite verschlossene Kanäle von nicht verschlossenen Kanälen benachbart sind (s. z.B. US 4 329 162). Auf diese Weise wird ein Gasstrom gezwungen, die porösen Kanalwandungen zu durchströmen, wodurch Partikel aus dem Abgasstrom herausgefiltert werden und gasförmige Bestandteile sehr effektiv durch die o.g. katalytischen Beschichtungen gereinigt werden. Solche Wabenkörper sind in den letzten Jahren sehr erfolgreich als Dieselpartikelfilter eingesetzt worden.

In den o.g. technischen Anwendungen werden aus verschiedenen Gründen selten monolithische Wabenkörper eingesetzt, sondern mehrere einzelne Wabenkörper durch Aneinanderfügen der seitlichen, parallel zur Durchströmungsrichtung liegenden Prismenwandungen miteinander zu einem zusammengesetzten Wabenkörper verbunden (durch Kleben, Garnieren oder Spannen), (s. z.B. US 4 304 585). Im Bezug zum zusammengesetzten Wabenkörper werden die einzelnen, ihn aufbauenden Wabenkörper im Folgenden als Wabenkörpersegmente bezeichnet. - Diese Wabenkörpersegmente bestehen ebenfalls aus einer Vielzahl von langgestreckten Kanälen unterschiedlicher Querschnittsformen, die durch dünne keramische Stege voneinander getrennt sind. In dem verbundenen Wabenkörper liegen die einzelnen Kanäle der verschiedenen Wabenkörpersegmente parallel zueinander. Für das Zusammensetzen von Wabenkörpern gibt es verschiedene Gründe:
- Zum einen, dass zur Herstellung von großen Wabenkörper-Querschnitten dann auch ein entsprechend großer Mundstück- und Extruderquerschnitt notwendig wäre, was technisch aufwändig wäre und beim Brennen (Sintern) der Wabenkörper große Schwierigkeiten bereiten würde, so dass es einfacher ist, einzelne Wabenkörpersegmente nach dem Brennen zu einem großen Körper zusammenzusetzen.
- Zum anderen entstehen bei vielen technischen Anwendungen Temperaturgradienten im Wabenkörper, was je nach Ausdehnungskoeffizient und Wärmeleitfähigkeit des Wandmaterials zu thermomechanischen Spannungen führt, die einen Verzug oder das Auftreten von Rissen im Wabenkörper verursachen können. Der Abbau solcher Spannungen in einem Wabenkörper wird ebenfalls durch die Verwendung von Segmentierungen erreicht. Sitzen die Wabenkörpersegmente locker aneinander und werden nur durch ihre Form z.B. durch eine äußere Spannkraft gehalten, so kann sich jedes Segment nahezu frei ausdehnen und bewegen, so dass die thermischen Spannungen an der Grenzfläche vollständig abgebaut werden. Häufig ist es jedoch notwendig, die einzelnen Segmente stoffschlüssig miteinander zu verbinden, um eine höhere Gesamtfestigkeit des zusammengesetzten Wabenkörpers zu erreichen bzw. auch eine Dichtheit der Nahtstellen gegenüber dem zu reinigenden Abgas zu erreichen. Das wird durch Kleben oder Garnieren der Wabenkörpersegmenten an den o.g. Prismenwandungen erreicht, wobei die Verbindungsschichten eine definierte Dicke und einen niedrigeren E-Modul als das Material der Wabenkörpersegmente besitzen sollten. Die Klebeschichten besitzen außerdem zumeist eine geringere Festigkeit als das Wabenkörpersegmentmaterial, so dass bei zu hohen Spannungen eher die Klebestellen reißen, als das Wabenkörpersegmentmaterial, so dass die Funktionsfähigkeit des zusammengesetzten Wabenkörpers zunächst erhalten bleibt.

Es ist leicht verständlich, dass durch die Geometrie der Wabenkörpersegmente die äußere Geometrie des zusammengesetzten Wabenkörpers beeinflusst wird, was wiederum darüber entscheidet, ob der Körper die für die jeweilige technische Anwendung benötigte Außengeometrie erreicht, oder ob diese durch ein aufwändiges Nachbearbeitungsverfahren hergestellt werden muss.

Die Größe und Geometrie der Wabenkörpersegmente beeinflusst aber auch erheblich wesentliche Eigenschaften, die bei der Herstellung und der Anwendung der Wabenkörper wichtig sind. So beeinflusst z.B. die Größe und die äußere Form der Wabenkörpersegmente deren mechanische Festigkeit, in Abhängigkeit von der Belastungsrichtung. Bei thermischer Belastung hat die Geometrie der Wabenkörpersegmente eine starke Auswirkung auf die Temperaturverteilung in den Segmenten und im zusammengesetzten Wabenkörper, sowie auf die infolge der Wärmedehnung entstehenden mechanischen Spannungen.

Durch Kombination der Wabenkörpersegmente zu einem zusammengesetzten Wabenkörper entstehen im Inneren des zusammengesetzten Wabenkörpers Kontaktflächen und Kontaktkanten. Im Querschnitt des zusammengesetzten Wabenkörpers senkrecht zur Durchströmungsrichtung ergeben sich Nahtlinien und Kontaktpunkte der Seiten bzw. Ecken der Querschnitte der Einzelsegmente.

Dabei hat die Geometrie der Wabenkörpersegmente eine starke Auswirkung auf die Anzahl, Größe und Lage der Kontaktflächen und Kontaktkanten, die sich im Inneren des zusammengesetzten Wabenkörpers befinden. Daher hat auch hier die geometrische Form der Wabenkörpersegmente eine große Auswirkung auf die mechanische Stabilität des zusammengesetzten Wabenkörpers. Das ist sowohl bei der Verarbeitung der Wabenkörper, als auch bei der Benutzung von großer Bedeutung.

Insbesondere bei Dieselpartikelfiltern aus Siliciumcarbid werden die Segmentierungen in großem Umfang benutzt (z.B. EP 0 816 065, EP 1 142 619). Typischerweise werden einzelne Wabenkörpersegmente mit quadratischem Querschnitt (mit abgerundeten Ecken) miteinander zu einem großen Block verklebt. Spezielle Verklebungsgeometrien und -materialien sollen dabei eine verbesserte Haltbarkeit erreichen (z.B. EP 1 291 061, WO 2005/084782, WO 2005/071234).

Bei Verwendung von Wabenkörpersegmenten mit quadratischem Querschnitt, wie in EP 1 508 356 angeführt, entstehen im Querschnitt 4 Berührungspunkte an den Ecken der Segmente, was relativ günstig ist. Die Stabilität der Einzelsegmente bei mechanischer Belastung senkrecht zur Durchströmungsrichtung ist ebenfalls relativ gut und nur in Richtung der Querschnittsdiagonale ungünstig. Kritisch sind gerade durchgängige und im 90° Winkel zueinander verlaufende Nahtlinien. Bei Herstellung von runden Außenkonturen-Querschnitten entsteht ein sehr hoher Verschnitt von mindestens 20%.

Bei Verwendung von Wabenkörpersegmenten mit dem Querschnitt eines gleichseitigen Dreiecks, wie ebenfalls in EP 1 508 356 angeführt, besitzen diese eine sehr hohe Festigkeit bei mechanischer Belastung senkrecht zur Durchströmungsrichtung, speziell bei Belastung der Kanten. Die Klebenähte im Querschnitt des zusammengesetzten Wabenkörpers senkrecht zur Durchströmungsrichtung verlaufen günstigerweise im Winkel von 60° zueinander, bilden aber für die Festigkeit des zusammengesetzten Wabenkörpers viele, sehr ungünstige gerade durchlaufende Nahtlinien. Besonders ungünstig für die Festigkeit ist, dass sich die Segmente im Inneren des zusammengesetzten Wabenkörpers an jeweils 6 Kanten bzw. im Querschnitt an 6 Ecken treffen. Der Querschnitt des zusammengesetzten Wabenkörpers senkrecht zur Durchströmungsrichtung ist als gleichseitiges Sechseck bzw. als gestrecktes Sechseck gestaltbar, so dass bei Herstellung von runden bzw. ovalen Außenkonturen-Querschnitten ein geringerer Verschnitt als bei der Verwendung von Wabenkörpersegmenten mit quadratischem Querschnitt entsteht.

Bei Verwendung von Wabenkörpersegmenten mit dem Querschnitt eines gleichseitigen, regelmäßigen Sechsecks, wie ebenfalls in EP 1 508 356 angeführt, besitzen diese eine geringe Festigkeit bei mechanischer Belastung senkrecht zur Durchströmungsrichtung, speziell bei Belastung der Kanten. Die Klebenähte im Querschnitt des zusammengesetzten Wabenkörpers senkrecht zur Durchströmungsrichtung verlaufen günstigerweise im Winkel von 120° zueinander und bilden keine für die Festigkeit des zusammengesetzten Wabenkörpers ungünstige gerade durchlaufende Nahtlinien. Günstig für die Festigkeit ist auch, dass sich immer nur 3 Segmente an den Kanten bzw. im Querschnitt an 3 Ecken treffen. Sehr ungünstig ist aber, dass der äußere Querschnitt des zusammengesetzten Wabenkörpers immer viele konkave Außenkonturen besitzt, so dass die zusammengesetzten Wabenkörper nicht unbearbeitet abgedichtet und eingebaut werden können und bei der Herstellung von runden oder ovalen Außenkonturen-Querschnitten ein hoher Verschnitt entsteht.

Bei anderen zusammengesetzten Wabenkörpern weisen die Wabenkörpersegmente einen Kreissegment-Querschnitt auf, so dass aus diesen Segmenten ohne Nachbearbeitung Wabenkörper mit runden Querschnittsgeometrien hergestellt werden können. Allerdings werden bei einer hohen Zahl von Segmentierungen und großen Querschnitt-Durchmessern der Wabenkörper die Segmente eine sehr langgestreckte und spitzwinklige Querschnittsgeometrie aufweisen, was für die Festigkeit der einzelnen Segmente ungünstig ist. Außerdem treffen sich die Kanten aller Segmente im Inneren des Wabenkörpers an einer Stelle, was für die Festigkeit des Wabenkörpers ungünstig ist. Deshalb wird bei großen Querschnitts-Durchmessern von zusammengesetzten Wabenkörpern ein zentrischer Wabenkörper mit rundem Querschnitt verwendet und um diesen werden mehrere, ihn umgebende Satelliten-Wabenkörpersegmente angebracht, die im Querschnitt die Form von Ringsegmenten besitzen. Allerdings werden dazu mindestens zwei unterschiedliche Segmentformen benötigt und die mechanische Stabilität der konkaven Seite der Satelliten-Wabenkörpersegmente ist ungünstig.

Die Aufgabe der vorliegenden Erfindung besteht in der Angabe eines zusammengesetzten Wabenkörpers, der aus Wabenkörpersegmenten mit einfachen und nur wenigen verschiedenen Querschnittsformen zusammengesetzt ist, eine hohe Festigkeit bei äußerer Belastung senkrecht zur Durchströmungsrichtung und bei ungleichmäßiger thermischer Beanspruchung besitzt und dessen Einzelsegmente eine hohe Festigkeit bei mechanischer oder thermomechanischer Belastung senkrecht zur Durchströmungsrichtung besitzen.

Die Aufgabe wird durch die in den Ansprüchen angegebene Erfindung gelöst. Vorteilhafte Ausgestaltungen sind Gegenstand der Unteransprüche.

Die erfindungsgemäßen zusammengesetzten Wabenkörper bestehen aus mindestens zwei prismatischen Wabenkörpersegmenten, wobei der äußere Querschnitt eines Wabenkörpersegmentes senkrecht zur Durchströmungsrichtung ein Viereck mit eingeschlossenen Winkeln von 60 ° und 120 ° oder von 60 ° und 90 ° und 120 ° ist, mit Abweichungen der Winkelgrade von höchstens jeweils 3 °, und mindestens jeweils eine äußere Seitenfläche der prismatischen Wabenkörpersegmente im Inneren des zusammengesetzten Wabenkörpers sich überwiegend über deren gesamte Länge und parallel zur Durchströmungsrichtung berühren oder stoffschlüssig miteinander verbunden und im Querschnitt des zusammengesetzten Wabenkörpers die Ecken des äußeren Querschnitts von prismatischen Wabenkörpersegmenten sich als Verlängerung ihrer Seiten mindestens an zwei und höchstens an fünf Stellen treffen oder stoffschlüssig miteinander verbunden sind, und der zusammengesetzte Wabenkörper insgesamt eine konvexe Außengeometrie mit einem insgesamt konvexen äußeren Querschnitt aufweist.

Vorteilhafterweise weisen alle eingesetzten prismatischen Wabenkörpersegmente den gleichen äußeren Querschnitt auf.

Ebenfalls vorteilhafterweise weisen die prismatischen Wabenkörpersegmente einen äußeren Querschnitt eines Viereckes mit zwei gegenüberliegenden eingeschlossenen Winkeln von jeweils 60 ° und mit den anderen beiden gegenüberliegenden eingeschlossenen Winkeln von jeweils 120 ° auf.

Weiterhin vorteilhafterweise weisen die prismatischen Wabenkörpersegmente einen äußeren Querschnitt eines Viereckes mit zwei nebeneinander liegenden eingeschlossenen Winkeln von jeweils 60 ° und mit den anderen beiden nebeneinander liegenden eingeschlossenen Winkeln von jeweils 120 ° auf.

Auch vorteilhafterweise weisen die prismatischen Wabenkörpersegmente einen äußeren Querschnitt eines Viereckes mit zwei nebeneinander liegenden eingeschlossenen Winkeln von jeweils 90 ° und mit zwei diesen beiden Winkeln gegenüberliegenden eingeschlossenen Winkel von 120 ° und 60 ° auf.

Und vorteilhafterweise weisen die prismatischen Wabenkörpersegmente einen äußeren Querschnitt eines gleichseitigen Parallelogramms oder eines Trapezes mit einer Basis a, die die doppelte Länge der anderen 3 Seiten besitzt, oder eines Trapezes mit einer Basis a, die die doppelte Länge der gegenüberliegenden Seite c besitzt, auf.

Vorteilhaft ist es, wenn die Ecken des äußeren Querschnittes der prismatischen Wabenkörpersegmente abgerundet sind, wobei die Radien der Ecken des äußeren Querschnitts vorteilhafterweise 1 bis 5 mm betragen können.

Es ist auch vorteilhaft, wenn der Querschnitt des Innenraumes der prismatischen Wabenkörpersegmente unterschiedlich zum äußeren Querschnitt der prismatischen Wabenkörpersegmente ist.

Vorteilhaft ist es auch, wenn der Querschnitt des Innenraumes der prismatischen Wabenkörpersegmente rund, viereckig, quadratisch, dreieckig, sechseckig ist und/oder eine gewellte Struktur aufweist.

Und vorteilhaft ist es auch, wenn der Querschnitt des Innenraumes aller prismatischen Wabenkörpersegmente des Wabenkörpers gleich und/oder gleichgroß ist.

Weiterhin vorteilhaft ist es, wenn der Querschnitt des Innenraumes der prismatischen Wabenkörpersegmente des Wabenkörpers unterschiedlich und/oder unterschiedlich groß ist.

Ebenfalls vorteilhaft ist es, wenn der Querschnitt des Innenraumes der prismatischen Wabenkörpersegmente des Wabenkörpers wechselseitig unterschiedlich und/oder unterschiedlich groß ist.

Von Vorteil ist es auch, wenn der Querschnitt des Innenraumes der prismatischen Wabenkörpersegmente des Wabenkörpers dreieckig und gleich groß ist.

Weiterhin von Vorteil ist es, wenn der Innenraum der prismatischen Wabenkörpersegmente durch Stege unterteilt ist, wobei die Stege im Innenraum der prismatischen Wabenkörpersegmente vorteilhafterweise in regelmäßigen geometrischen Mustern über den Querschnitt angeordnet sein können und/oder wobei die Stege im Innenraum der Wabenkörpersegmente vorteilhafterweise über die gesamte Länge der Wabenkörpersegmente verlaufen können und/oder wobei die Stege im Innenraum der Wabenkörpersegmente vorteilhafterweise Kanäle über die gesamte Länge der Wabenkörpersegmente bilden können, die vorteilhafterweise einen dreieckigen und/oder quadratischen und/oder rechteckigen Querschnitt haben können und/oder bei denen die durch die Stege gebildeten Kanäle im Innenraum der Wabenkörpersegmente vorteilhafterweise an ihren Enden wechselseitig verschlossen sein können und im Wabenkörpersegment jeweils immer Kanäle nebeneinander angeordnet sein können, bei denen das geschlossenen Ende jeweils am anderen Ende des Wabenkörpers angeordnet sind, so dass ein wechselseitiger Verschluss der Enden der nebeneinander liegenden Kanäle des Wabenkörpersegmentes an jeweils einem Ende des Wabenkörpers vorliegen kann.

Ebenfalls von Vorteil ist es, wenn der konvexe äußere Querschnitt des gesamten Wabenkörpers ein symmetrisches oder gestrecktes Sechseck oder ein Rechteck ist, wobei vorteilhafterweise zur Erzielung eines rechteckigen äußeren Querschnittes des gesamten Wabenkörpers Wabenkörpersegmente mit einem äußeren Querschnitt eines Viereckes mit zwei nebeneinander liegenden eingeschlossenen Winkeln von jeweils 90 ° und mit zwei diesen beiden Winkeln gegenüberliegenden eingeschlossenen Winkel von 120 ° und 60 ° eingesetzt sind.

Und auch von Vorteil ist es, wenn mindestens die äußere Wandung der Wabenkörpersegmente eine rauhe Oberflächenstruktur aufweist, wobei vorteilhafterweise die äußere Wandung der Wabenkörpersegmente eine rauhere Oberfläche aufweist, als die innere Wandung der Wabenkörpersegmente und/oder die äußere Wandung der Wabenkörpersegmente Fixierungsrillen über die Länge der Wabenkörpersegmente aufweist und/oder nur die Berührungsflächen der Wabenkörpersegmente Oberflächenstrukturen aufweisen.

Vorteilhafterweise sind die äußeren Seitenflächen der Wabenkörpersegmente, die stoffschlüssig miteinander verbunden sind, durch einen Klebstoff stoffschlüssig verbunden sind.

Auch vorteilhafterweise bestehen die Wabenkörpersegmente ganz oder teilweise aus keramischen und/oder metallischen Materialien, wobei dies vorteilhaft Al203, Cordierit, Mullit, Titanoxid, Aluminiumtitanat, Siliciumcarbid, Silicium-Siliciumcarbid, Siliciumnitrid, Aluminiumnitrid oder aus Mischungen dieser Keramiken oder deren Mischkeramiken oder Sinterstahl sind.

Von Vorteil ist es, wenn der Klebstoff aus anorganischen Bestandteilen und einem keramischen Füllstoff und einem Bindemittel besteht, wobei vorteilhafterweise als keramische Füllstoffe keramische Pulver oder keramische Pulver und keramische Fasern vorhanden sind und/oder das keramische Pulver das gleiche Material ist, welches die Wandungen der Wabenkörpersegmente bildet und/oder als Bindemittel hydraulische Bindemittel eingesetzt sind, wie vorteilhafterweise als Bindemittel Ca-Aluminate, Aluminiumphosphate, Natriumsilikate (Wasserglas), Silikasole und/oder härtbare Harze.
Weiterhin ist von Vorteil, wenn die gesamte Oberfläche eines oder mehrerer Wabenkörpersegmente oder Teile davon mit Katalysatormaterial aus Edelmetallen, dotierten Titanoxiden und/oder Zeolithen beschichtet ist.

Auch von Vorteil ist es, wenn die gesamte Oberfläche eines oder mehrerer Wabenkörpersegmente oder Teile davon mit Adsorbentien aus Aktivkohle, Zeolithen und/oder Lithiumsilikaten beschichtet ist.

Vorteilhaft ist es auch, wenn die konvexe Außenkontur des Wabenkörpers nach Zusammensetzung des Wabenkörpers zur Veränderung des äußeren Querschnittes des Wabenkörpers mechanisch und/oder chemisch behandelt ist, wobei vorteilhafterweise ein runder oder ovaler äußerer Querschnitt des zusammengesetzten Wabenkörpers vorhanden ist.

Ebenfalls von Vorteil ist es, wenn der zusammengesetzte Wabenkörper mechanisch verspannt und/oder umhüllt ist.

Mit dem erfindungsgemäßen zusammengesetzten Wabenkörper liegt ein Bauelement vor, welches durch die Verwendung von möglichst nur einer Querschnittsform von Wabenkörpersegmenten auf einfache Weise kostengünstig herstellbar ist. Dadurch wird ebenfalls eine hohe Festigkeit bei äußerer Belastung und ungleichmäßiger thermischer Belastung erreicht.

Durch das Zusammensetzen des erfindungsgemäßen Wabenkörpers aus mehreren einzelnen Wabenkörpersegmenten ist eine vollständige Flächenabdeckung der Querschnittsfläche der Wabenkörpers und im Volumen auch über seine gesamte Länge möglich, die nur von den dünnen Klebeschichten unterbrochen ist, d.h. im Volumen des zusammengesetzten Wabenkörpers entstehen keine unerwünschten Hohlräume zwischen den Wabenkörpersegmenten.

Weiterhin kann der Innenraum eines einzelnen oder auch mehrerer oder aller Wabenkörpersegmente auch durch Stege unterteilt sein. Dabei ist unter dem Innenraum der Raum zu verstehen, der von den vier seitlichen Wänden eines Wabenkörpersegmentes umschlossen ist. Die geometrische Form des Innenraumes der Wabenkörpersegmente wird herstellungsbedingt häufig die gleiche geometrische Form des äußeren Querschnitts der Wabenkörpersegmente aufweisen, kann aber auch eine davon abweichende geometrische Form haben. Die Stege, die das Volumen des Innenraumes unterteilen, bestehen vorteilhafterweise aus dem gleichen Material, wie die Wabenkörpersegmentwände. Auch ist es vorteilhaft, wenn die Stege über den gesamten Innenraum sowohl über den Querschnitt als auch über die Länge der Wabenkörpersegmente gleichmäßig verteilt angeordnet sind. Sie können dabei ebenfalls vorteilhafterweise einen Raum umschließen, der die gleiche geometrische Form, wie die des äußeren Querschnitts und/oder des Innenraumes, aufweist, oder auch andere. Dabei können als abweichende geometrische Formen vorteilhafterweise dreieckige genannt werden, oder solche, die zumindest teilweise gekrümmte Seiten aufweisen, wenn der Innenraum der Wabenkörpersegmente beispielsweise in den Ecken abgerundet ausgebildet ist.

Weiterhin ist es aus Kostengründen und Gründen der Fertigungslogistik wünschenswert, nur eine Querschnittsform oder nur eine geringe Anzahl von verschiedenen Querschnittsformen zu benutzen. Dies ist durch die erfindungsgemäße Lösung möglich. Außerdem können erfindungsgemäß die einzelnen Wabenkörpersegmente eine gleiche oder ähnliche äußere Querschnittsfläche und damit in etwa das gleiche Volumen aufweisen, wodurch die thermischen Spannungen in allen Segmenten annähernd gleich gehalten werden können.

Die geometrische Größe und Länge der Wabenkörpersegmente und des zusammengesetzten Wabenkörpers hängt von der jeweiligen Anwendung und auch von betriebswirtschaftlichen Erwägungen ab und kann von einem Fachmann leicht durch einfache Berechnungen oder durch Versuche ermittelt werden.

Ebenfalls ist es wichtig, dass mit den erfindungsgemäßen zusammengesetzten Wabenkörpern eine bestimmte, zumeist vorgegebene Außenkontur erreicht werden kann, wodurch die erfindungsgemäßen Wabenkörper ohne Weiteres in eine technische Peripherie eingebaut werden können und dort gegen mechanische Belastungen, z.B. Stöße und Schwingungen geschützt sind oder abgedichtet werden können, um eine Randgängigkeit des zu behandelnden Abgases zu vermeiden. Bei Dieselpartikelfiltern und Katalysatorträgern der Kfz-Branche wird dies als Canning bezeichnet, bei dem die (zusammengesetzten) Wabenkörper an dem Außenmantel parallel zur Durchströmungsrichtung mit einer metallischen Hülle versehen werden. Dazu wird die parallel zur Durchströmungsrichtung gelegene äußere Manteloberfläche des zusammengesetzten Wabenkörpers mit einer Lager- und Dichtungsmatte umhüllt und mit einem Metallmantel versehen. Frei bleiben dabei die beiden senkrecht zur Durchströmungsrichtung gelegenen Stirnseiten des Wabenkörpers, um einen Zutritt und Austritt des Abgases zu gewährleisten. Auch beim Verpacken (Canning) entstehen mechanische Belastungen des zusammengesetzten Wabenkörpers, speziell Druckspannungen senkrecht zur Durchströmungsrichtung des Wabenkörpers. Es ist vorteilhaft, dass die erfindungsgemäßen zusammengesetzten Wabenkörper im äußeren Querschnitt senkrecht zur Durchströmungsrichtung eine konvexe, d.h. nach außen gewölbte Struktur besitzen, da konkave Bereiche in der Außenkontur schlecht abgedichtet werden können und nur eine geringe Festigkeit besitzen. Besonders bevorzugt sind deshalb runde oder ovale äußere Querschnitte des zusammengesetzten Wabenkörpers senkrecht zur Durchströmungsrichtung, da diese gut abgedichtet werden können und die hierbei auftretenden Kräfte gleichmäßig verteilt werden.

Für die Festigkeit des zusammengesetzten Wabenkörpers ist es ungünstig, wenn die Verbindungsstellen der einzelnen Wabenkörpersegmente im Querschnitt senkrecht zur Durchströmungsrichtung (d.h. die Nahtlinien) viele längere durchlaufende Geraden bilden, da hierbei die geringere Festigkeit der Verbindungsstellen nachteilig ist und bei einer Belastung durch äußere oder innere mechanische Spannungen ein völliges Durchreißen des zusammengesetzten Wabenkörpers an den Nahtstellen auftreten kann.
Ebenfalls ist es nachteilig für die Festigkeit, wenn beim Zusammentreffen mehrerer Segmente im Inneren des Querschnitts des zusammengesetzten Wabenkörpers senkrecht zur Durchströmungsrichtung sehr viele Kanten der Einzelsegmentquerschnitte zusammentreffen, da hier ebenfalls die geringe Festigkeit der Nahtstellen nachteilig wirkt.
Treffen der Ecken und Kanten im erfindungsgemäßen Sinne kann einerseits die Berührung einer oder mehrerer Ecken und Kanten der einzelnen Wabenkörpersegmente und/oder der Stege im Inneren der Wabenkörpersegmente untereinander sein. Im Falle von abgerundeten Ecken und Kanten beinhaltet das Treffen dieser Ecken und Kanten, dass sich die Verlängerungen ihrer Seitenflächen oder -linien in einem Punkte treffen.
Diese Nachteile werden durch den erfindungsgemäßen Wabenkörper behoben.

Aus den erfindungsgemäßen prismatischen Wabenkörpersegmenten mit einem viereckigen äußeren Querschnitt können dagegen auch schon bei nur einer Querschnittsform lückenfreie Filter zusammengesetzt werden.

Eine geringe Nachbearbeitung ist bei der erfindungsgemäßen Lösung ebenfalls möglich, obwohl aufgrund der gewählten äußeren Querschnitte der Wabenkörpersegmente und ihre Anordnung zueinander eine weitgehende Füllung eines runden oder ovalen äußeren Querschnitts des zusammengesetzten Wabenkörper erreicht werden kann.
In jedem Falle entsteht durch eine Nachbearbeitung eines erfindungsgemäßen zusammengesetzten Wabenkörpers weniger Verschnitt, als bei der üblichen Fertigung aus Wabenkörpersegmenten mit quadratischem Querschnitt.

Aber durch die erfindungsgemäße Lösung sind auch gestreckte sechseckige oder rechteckige äußere Querschnitte des zusammengesetzten Wabenkörpers möglich, die dann zu einem ovalen äußeren Querschnitt bearbeitet werden können.

Weiterhin kann erfindungsgemäß die Oberfläche der äußeren Wandungen der Wabenkörpersegmente glatt oder mit spezieller Oberflächenstruktur/Rauhigkeit, mit Fixierungsrillen oder mit einer Beschichtung versehen sein, die auf allen Oberflächen gleich oder unterschiedlich an jeder Seite der Wabenkörpersegmente sein kann (US 4304585 B1).

Vorteilhaft ist auch, wenn mindestens die Oberflächen, die mit dem Medium in Kontakt treten, mit einer beispielsweise Katalysatorschicht beschichtet sind.

Nachfolgend wird die Erfindung an einem Ausführungsbeispiel näher erläutert.

Dabei zeigen
- Figur 1: die äußeren Querschnitte der Wabenkörpersegmente
- Figur 1.1: den äußeren Querschnitt eines Wabenkörpersegmentes, welches als Viereck mit zwei nebeneinander liegenden eingeschlossenen Winkeln von jeweils 60° und 120° ausgebildet ist
- Figur 1.1.1: den äußeren Querschnitt eines Wabenkörpersegmentes wie in Fig. 1.1, bei dem der Querschnitt die Form eines Trapezes mit einer Basis a annimmt, die die doppelte Länge der anderen 3 Seiten c besitzt
- Figur 1.2: den äußeren Querschnitt eines Wabenkörpersegmentes, welches als Viereck mit zwei gegenüberliegenden eingeschlossenen Winkeln von jeweils 60 ° und mit den anderen beiden gegenüberliegenden eingeschlossenen Winkeln von jeweils 120 ° ausgebildet ist
- Figur 1.2.1: den äußeren Querschnitt eines Wabenkörpersegmentes wie in Fig. 1.2, bei dem der Querschnitt die Form eines gleichseitigen Parallelogramms (Rhombus) besitzt.
- Figur 1.3: den äußeren Querschnitt eines Wabenkörpersegmentes, welches als Viereck mit eingeschlossenen Winkeln von 60, 90 und 120 ° ausgebildet ist.
- Figur 1.3.1: den äußeren Querschnitt eines Wabenkörpersegmentes wie in Fig. 1.3, bei dem der Querschnitt die Form eines Trapezes mit einer Basis a annimmt, die die doppelte Länge der gegenüber liegenden Seite c besitzt.
- Figur 1.4: ein prismatisches Wabensegment mit einem Querschnitt entsprechend Figur 1.1
- Figur 1.5: ein prismatisches Wabensegment entsprechend Fig. 1.4 mit abgerundeten Längskanten
- Figur 2: die äußeren Querschnitte der unbearbeiteten zusammengesetzten Waben körper
- Figur 2.1: den Querschnitt eines aus 2 Wabenkörpersegmenten entsprechend Fig. 1.1 und 2 Wabenkörpersegmenten entsprechend Fig. 1.2 zusammengesetzten Wabenkörpers
- Figur 2.2: den Querschnitt eines aus 8 Wabenkörpersegmenten entsprechend Fig. 1.1.1 zusammengesetzten Wabenkörpers
- Figur 2.3: den Querschnitt eines aus 12 Wabenkörpersegmenten entsprechend Fig. 1.2.1 zusammengesetzten Wabenkörpers
- Figur 2.4: den Querschnitt eines aus 24 Wabenkörpersegmenten entsprechend Fig. 1.3.1 zusammengesetzten Wabenkörpers
- Figur 2.5: den Querschnitt eines aus 36 Wabenkörpersegmenten entsprechend Fig. 1.3.1 zusammengesetzten Wabenkörpers
- Figur 2.6: ein aus 8 prismatischen Wabenkörpersegmenten mit Querschnitten entsprechend Fig. 1.1.1 zusammengesetzten Wabenkörpers
- Figur 3: schematisch im Querschnitt eine mögliche Wabenstruktur eines Wabenkörpersegmentes gem. Fig. 1.1
- Figur 4: schematisch im Querschnitt eine mögliche Wabenstruktur eines Wabenkörpersegmentes gem. Fig. 1.3.1 mit abgerundeten Ecken

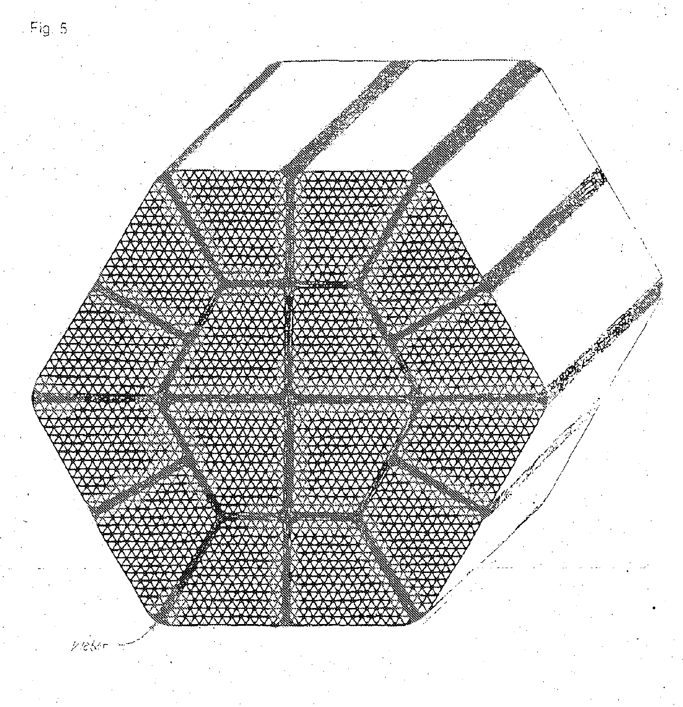

- Figur 5: ein aus 16 prismatischen Wabenkörpersegmenten mit Querschnitten entsprechend Fig. 1.3.1 zusammengesetzten Wabenkörpers mit abgerundeten Kanten, Wabenstruktur und Klebenähten

### Beispiel 1

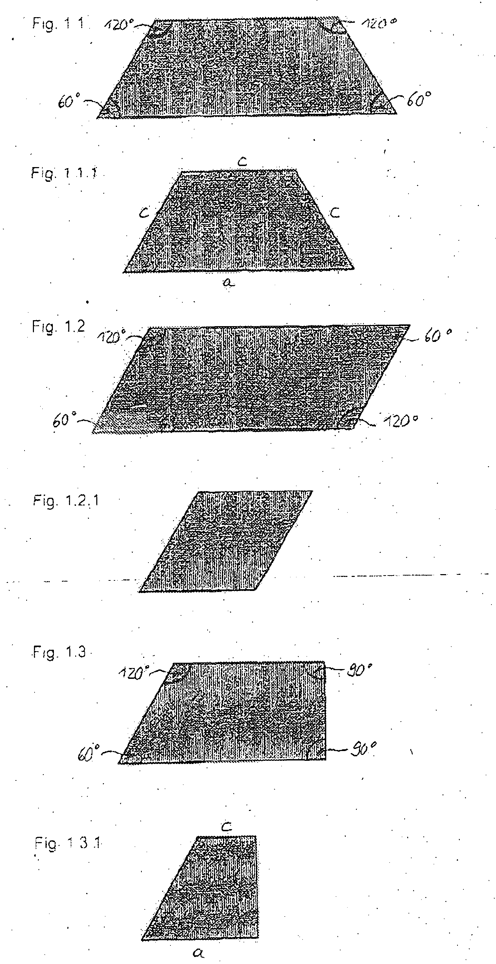

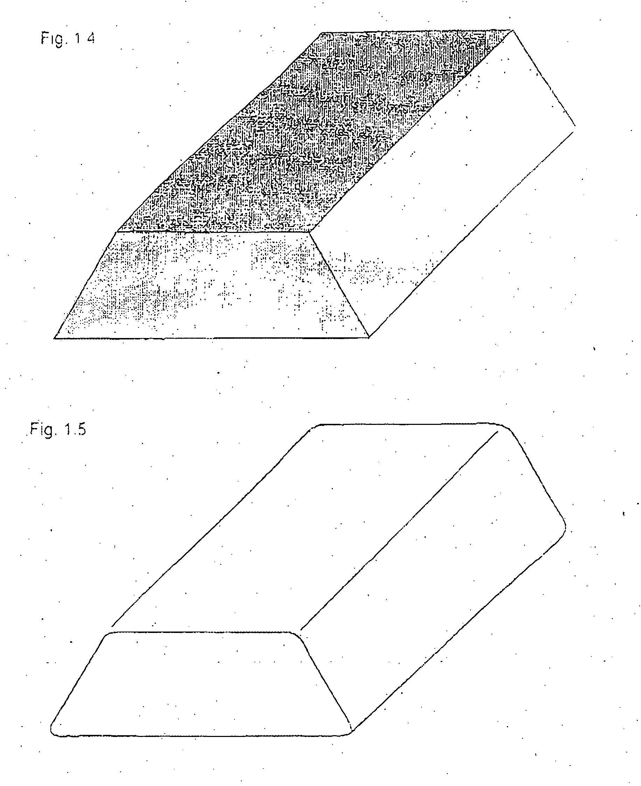

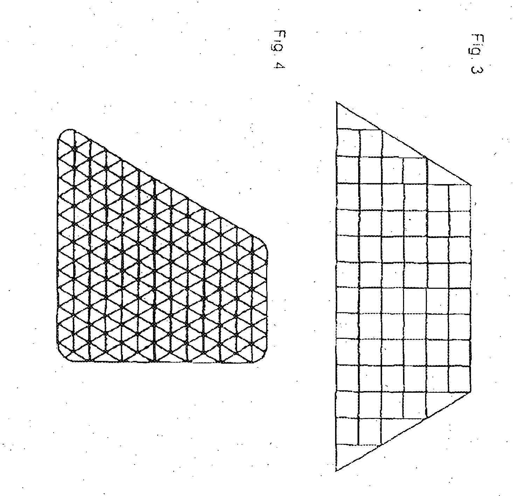

73,5 % eines Siliciumcarbidpulvers mit einer mittleren Korngröße von 30 µm wird mit 1 % Aluminiumoxid und 0,5 % Yttriumoxid, 7 % Methylcellulose als Binder, 3 % Plastifikator, 1 % Gleitmittel und 14 % Wasser gemischt und geknetet. Die Masse wird mit einem Schneckenextruder durch ein Wabenmundstück zu prismatischen Strängen gepresst, die einen äußeren Querschnitt entsprechend Fig. 1.3.1 besitzen. Die Länge der Seite c beträgt 34,5 mm. Die äußeren Ecken sind mit einem Radius von 2,6 an den 120 und 90° Ecken und mit einem Radius von 1,9 mm an der 60° Ecke abgerundet. Das Wabenmundstück besitzt einen solchen Aufbau, dass im Querschnitt senkrecht zur Längsachse der prismatischen Stränge eine innere Struktur und ein äußerer Querschnitt gemäß Fig. 4 entsteht, wobei die Wandstärke der Stege ca. 350 µm beträgt.

Der prismatische Strang wird mit einem Messer auf einzelne prismatische Wabenkörpersegmente von ca. 250 mm Länge geschnitten und die Segmente anschließend in Trockenformen zwei Tage bei 40°C getrocknet. Danach werden die Wabenkörpersegmente an beiden Stirnseiten des Prismas senkrecht zur Längsachse mit einer Diamantsäge auf ein genaues Maß von 230 mm Länge geschnitten.

73,5 % eines Siliciumcarbidpulvers mit einer mittleren Korngröße von 30 µm wird mit 1 % Aluminiumoxid und 0,5 % Yttriumoxid, 3 % Methylcellulose und 22 % Wasser vermischt und die entstehende Masse mittels einer Kanüle von den Stirnseiten aus ca. 5 mm tief in die Wabenkanäle alternierend so eingebracht, dass immer abwechselnd ein Kanal auf einer Stirnseite verschlossen ist und auf der gegenüberliegenden Seite frei bleibt, sowie an einer Stirnseite immer ein verschlossener Kanal von einem offenen Kanal benachbart ist.

Die Wabenkörpersegmente werden in einem Schutzgasofen unter Argonatmosphäre bei 1950° bei 2 Stunden Haltezeit gesintert.

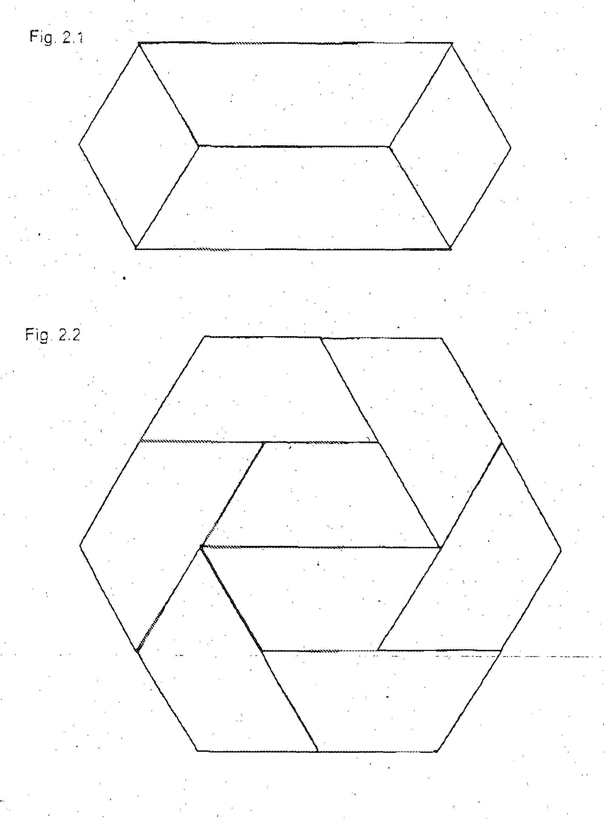

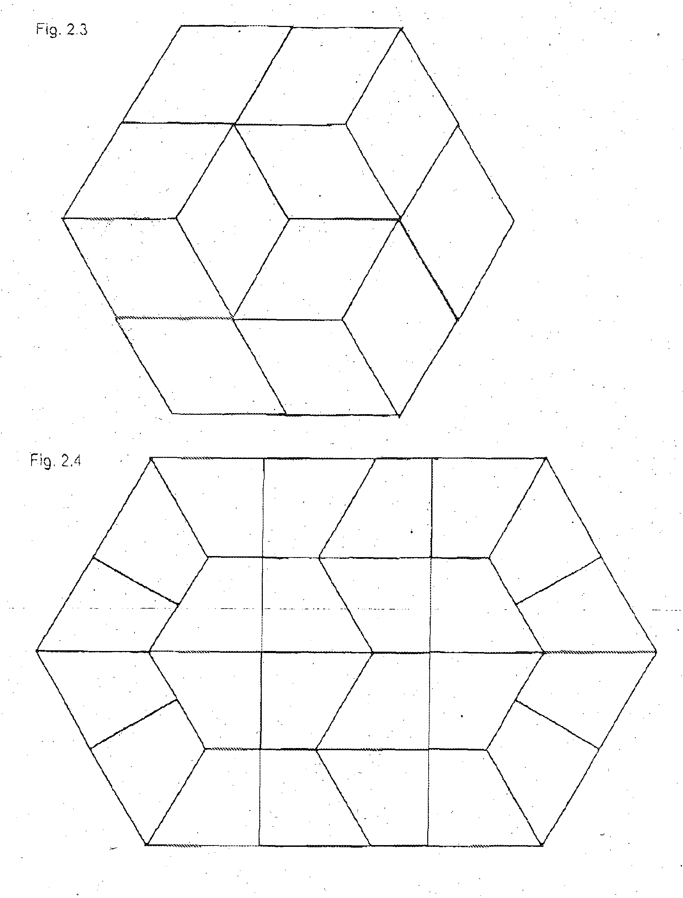

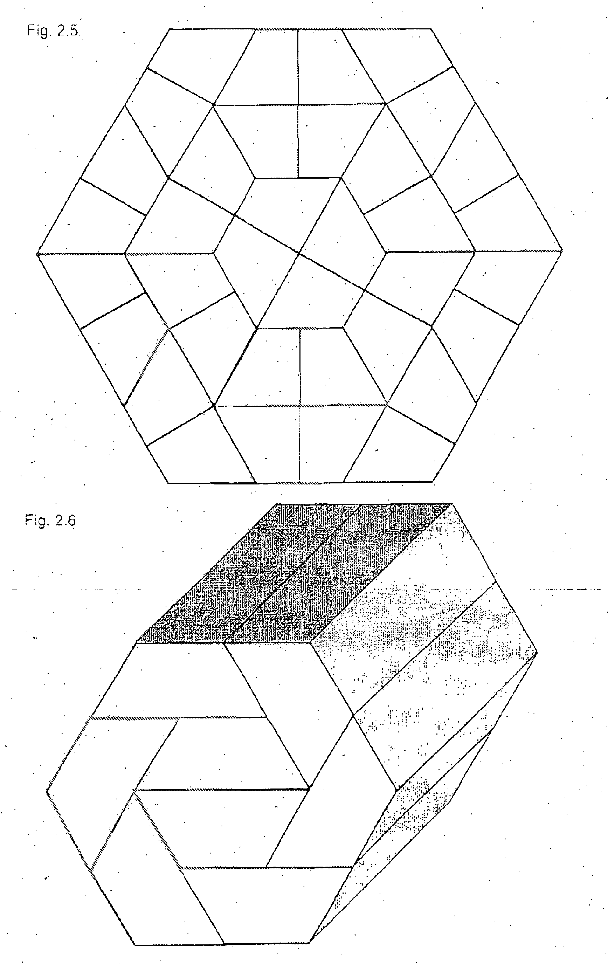

30 % eines Siliciumcarbidpulvers mit einer mittleren Korngröße von 5 µm wird mit 25 % Alumosilikat-Kurzfasern, 15% Silikasol (30%ig) und 30% Wasser zu einem keramischen Kleber vermischt. Die Klebemasse wird dünn auf die seitlichen Prismenflächen von 36 gesinterten Wabenkörpersegmenten aufgetragen und diese so angeordnet, dass sich im Querschnitt eine Anordnung gem. Fig. 2.5 ergibt. Zwischen den Segmenten ergeben sich Klebespalte, die im Querschnitt 1,8 mm dick sind. Nach dem Zusammenkleben wird der Wabenkörper in eine Trocknungsform eingebracht und bei 120°C 2 Tage getrocknet.
Die Klebenähte ergeben im Querschnitt keine gerade durchlaufenden Linien und die Ecken der Wabenkörpersegmente ergeben gemeinsame Klebestellen an 2, 3, 4, oder 5 Stellen.

Der zusammengesetzte Wabenkörper hat die Form eines rechtwinkligen Prismas, dessen Grundfläche ein regelmäßiges Sechseck ergibt. Der Abstand der gegenüberliegenden Seiten des Sechsecks beträgt ca. 250 mm; die Länge des Prismas 230 mm. Der Wabenkörper kann ohne Verschnitt in ein zylindrisches Metallgehäuse eingebaut werden und als Dieselpartikelfilter für eine Baumaschine verwendet werden.

## Patentansprüche

1. Zusammengesetzter Wabenkörper, bestehend aus mindestens zwei prismatischen Wabenkörpersegmenten, wobei der äußere Querschnitt eines Wabenkörpersegmentes senkrecht zur Durchströmungsrichtung ein Viereck mit eingeschlossenen Winkeln von 60° und 120 ° oder von 60 ° und 90 ° und 120 ° ist, mit Abweichungen der Winkelgrade von höchstens jeweils 3 °, und mindestens jeweils eine äußere Seitenfläche der prismatischen Wabenkörpersegmente im Inneren des zusammengesetzten Wabenkörpers sich überwiegend über deren gesamte Länge und parallel zur Durchströmungsrichtung berühren oder stoffschlüssig miteinander verbunden und im Querschnitt des zusammengesetzten Wabenkörpers die Ecken des äußeren Querschnitts von prismatischen Wabenkörpersegmenten sich als Verlängerung ihrer Seiten mindestens an zwei und höchstens an fünf Stellen treffen oder stoffschlüssig miteinander verbunden sind, und der zusammengesetzte Wabenkörper insgesamt eine konvexe Außengeometrie mit einem insgesamt konvexen äußeren Querschnitt aufweist.

2. Wabenkörper nach Anspruch 1, bei dem alle eingesetzten prismatischen Wabenkörpersegmente den gleichen äußeren Querschnitt aufweisen.

3. Wabenkörper nach Anspruch 1, bei dem die prismatischen Wabenkörpersegmente einen äußeren Querschnitt eines Viereckes mit zwei gegenüberliegenden eingeschlossenen Winkeln von jeweils 60 ° und mit den anderen beiden gegenüberliegenden eingeschlossenen Winkeln von jeweils 120° aufweisen.

4. Wabenkörper nach Anspruch 1, bei dem die prismatischen Wabenkörpersegmente einen äußeren Querschnitt eines Viereckes mit zwei nebeneinander liegenden eingeschlossenen Winkeln von jeweils 60° und mit den anderen beiden nebeneinander liegenden eingeschlossenen Winkeln von jeweils 120° aufweisen.

5. Wabenkörper nach Anspruch 1, bei dem die prismatischen Wabenkörpersegmente einen äußeren Querschnitt eines Viereckes mit zwei nebeneinander liegenden eingeschlossenen Winkeln von jeweils 90° und mit zwei diesen beiden Winkeln, gegenüberliegenden eingeschlossenen Winkel von 120° und 60° aufweisen.

6. Wabenkörper nach Anspruch 1, bei dem die prismatischen Wabenkörpersegmente einen äußeren Querschnitt eines gleichseitigen Parallelogramms oder eines Trapezes mit einer Basis a, die die doppelte Länge der anderen 3 Seiten besitzt, oder eines Trapezes mit einer Basis a, die die doppelte Länge der gegenüberliegenden Seite c besitzt, aufweisen.

7. Wabenkörper nach Anspruch 1, bei dem die Ecken des äußeren Querschnittes der prismatischen Wabenkörpersegmente abgerundet sind.

8. Wabenkörper nach Anspruch 7, bei dem die Radien der Ecken des äußeren Querschnitts von 1 bis 5 mm betragen.

9. Wabenkörper nach Anspruch 1, bei dem der Querschnitt des Innenraumes der prismatischen Wabenkörpersegmente unterschiedlich zum äußeren Querschnitt der prismatischen Wabenkörpersegmente ist.

10. Wabenkörper nach Anspruch 1, bei dem der Querschnitt des Innenraumes der prismatischen Wabenkörpersegmente rund, viereckig, quadratisch, dreieckig, sechseckig ist und/oder eine gewellte Struktur aufweist.

11. Wabenkörper nach Anspruch 1, bei dem der Querschnitt des Innenraumes aller prismatischen Wabenkörpersegmente des Wabenkörpers gleich und/oder gleichgroß ist.

12. Wabenkörper nach Anspruch 1, bei dem der Querschnitt des Innenraumes der prismatischen Wabenkörpersegmente des Wabenkörpers unterschiedlich und/oder unterschiedlich groß ist.

13. Wabenkörper nach Anspruch 1, bei dem der Querschnitt des Innenraumes der prismatischen Wabenkörpersegmente des Wabenkörpers wechselseitig unterschiedlich und/oder unterschiedlich groß ist.

14. Wabenkörper nach Anspruch 1, bei dem der Querschnitt des Innenraumes der prismatischen Wabenkörpersegmente des Wabenkörpers dreieckig und gleich groß ist.

15. Wabenkörper nach Anspruch 1, bei dem der Innenraum der prismatischen Wabenkörpersegmente durch Stege unterteilt ist.

16. Wabenkörper nach Anspruch 15, bei dem die Stege im Innenraum der prismatischen Wabenkörpersegmente in regelmäßigen geometrischen Mustern über den Querschnitt angeordnet sind.

17. Wabenkörper nach Anspruch 15, bei dem die Stege im Innenraum der Wabenkörpersegmente über die gesamte Länge der Wabenkörpersegmente verlaufen.

18. Wabenkörper nach Anspruch 15, bei dem die Stege im Innenraum der Wabenkörpersegmente Kanäle über die gesamte Länge der Wabenkörpersegmente bilden.

19. Wabenkörper nach Anspruch 18, bei dem die Kanäle einen dreieckigen und/oder quadratischen und/oder rechteckigen Querschnitt haben.

20. Wabenkörper nach Anspruch 18, bei dem die durch die Stege gebildeten Kanäle im Innenraum der Wabenkörpersegmente an ihren Enden wechselseitig verschlossen sind und im Wabenkörpersegment jeweils immer Kanäle nebeneinander angeordnet sind, bei denen das geschlossenen Ende jeweils am anderen Ende des Wabenkörpers angeordnet ist, so dass ein wechselseitiger Verschluss der Enden der nebeneinander liegenden Kanäle des Wabenkörpersegmentes an jeweils einem Ende des Wabenkörpers vorliegt.

21. Wabenkörper nach Anspruch 1, bei dem der konvexe äußere Querschnitt des gesamten Wabenkörpers ein symmetrisches oder gestrecktes Sechseck oder ein Rechteck ist.

22. Wabenkörper nach Anspruch 21, bei dem zur Erzielung eines rechteckigen äußeren Querschnittes des gesamten Wabenkörpers Wabenkörpersegmente mit einem äußeren Querschnitt eines Viereckes mit zwei nebeneinander liegenden eingeschlossenen Winkeln von jeweils 90° und mit zwei diesen beiden Winkeln gegenüberliegenden eingeschlossenen Winkel von 120° und 60° eingesetzt sind.

23. Wabenkörper nach Anspruch 1, bei dem mindestens die äußere Wandung der Wabenkörpersegmente eine rauhe Oberflächenstruktur aufweist.

24. Wabenkörper nach Anspruch 23, bei dem die äußere Wandung der Wabenkörpersegmente eine rauhere Oberfläche aufweist, als die innere Wandung der Wabenkörpersegmente.

25. Wabenkörper nach Anspruch 23, bei dem die äußere Wandung der Wabenkörpersegmente Fixierungsrillen über die Länge der Wabenkörpersegmente aufweist.

26. Wabenkörper nach Anspruch 23, bei dem nur die Berührungsflächen der Wabenkörpersegmente Oberflächenstrukturen aufweisen.

27. Wabenkörper nach Anspruch 1, bei dem die äußeren Seitenflächen der Wabenkörpersegmente, die stoffschlüssig miteinander verbunden sind, durch einen Klebstoff stoffschlüssig verbunden sind.

28. Wabenkörper nach Anspruch 1, bei dem die Wabenkörpersegmente ganz oder teilweise aus keramischen und/oder metallischen Materialien bestehen.

29. Wabenkörper nach Anspruch 28, bei dem die Wabenkörpersegmente aus Al2O3, Cordierit, Mullit, Titanoxid, Aluminiumtitanat, Siliciumcarbid, Silicium-Siliciumcarbid, Siliciumnitrid, Aluminiumnitrid oder aus Mischungen dieser Keramiken oder aus deren Mischkeramiken bestehen.

30. Wabenkörper nach Anspruch 28, bei dem die Wabenkörpersegmente aus Sinterstahl bestehen.

31. Wabenkörper nach Anspruch 1, bei dem der Klebstoff aus anorganischen Bestandteilen und einem keramischen Füllstoff und einem Bindemittel besteht.

32. Wabenkörper nach Anspruch 31, bei dem als keramische Füllstoffe keramische Pulver oder keramische Pulver und keramische Fasern vorhanden sind.

33. Wabenkörper nach Anspruch 32, bei dem das keramische Pulver das gleiche Material ist, welches die Wandungen der Wabenkörpersegmente bildet.

34. Wabenkörper nach Anspruch 31, bei dem als Bindemittel hydraulische Bindemittel eingesetzt sind.

35. Wabenkörper nach Anspruch 31, bei dem als Bindemittel Ca-Aluminate, Aluminiumphosphate, Natriumsilikate (Wasserglas), Silikasole und/oder härtbare Harze vorhanden sind.

36. Wabenkörper nach Anspruch 1, bei dem die gesamte Oberfläche eines oder mehrerer Wabenkörpersegmente oder Teile davon mit Katalysatormaterial aus Edelmetallen, dotierten Titanoxiden und/oder Zeolithen beschichtet ist.

37. Wabenkörper nach Anspruch 1, bei dem die gesamte Oberfläche eines oder mehrerer Wabenkörpersegmente oder Teile davon mit Adsorbentien aus Aktivkohle, Zeolithen und/oder Lithiumsilikaten beschichtet ist.

38. Wabenkörper nach Anspruch 1, bei dem die konvexe Außenkontur des Wabenkörpers nach Zusammensetzung des Wabenkörpers zur Veränderung des äußeren Querschnittes des Wabenkörpers mechanisch und/oder chemisch behandelt ist.

39. Wabenkörper nach Anspruch 38, bei dem ein runder oder ovaler äußerer Querschnitt des zusammengesetzten Wabenkörpers vorhanden ist.

40. Wabenkörper nach Anspruch 1, bei dem der zusammengesetzte Wabenkörper mechanisch verspannt und/oder umhüllt ist.

## Claims

1. Composite honeycomb, composed of at least two prismatic honeycomb segments, the outer cross-section of a honeycomb segment being perpendicularly to the throughflow direction a quadrilateral with included angles of 60° and 120° or of 60° and 90° and 120°, with deviations in the degrees of angle of at most 3° in each case, and in each case at least one outer side face of a prismatic honeycomb segment touching an outer side face of another prismatic honeycomb segment, inside the composite honeycomb, predominantly over their entire length and parallel to the throughflow direction or being connected to one another in a materially integral manner, and, in the cross-section of the composite honeycomb, the corners of the outer cross-section of prismatic honeycomb segments meeting one another or being connected to one another in a material integral manner as a prolongation of their sides at least at two and at most at five points, and the composite honeycomb having overall a convex external geometry with an outer cross-section which overall is convex.

2. Honeycomb according to Claim 1, in which all the prismatic honeycomb segments used have the same outer cross-section.

3. Honeycomb according to Claim 1, in which the prismatic honeycomb segments have an outer cross-section of a quadrilateral with two opposite included angles of 60° in each case and with the other two opposite included angles of 120° in each case.

4. Honeycomb according to Claim 1, in which the prismatic honeycomb segments have an outer cross-section of a quadrilateral with two juxtaposed included angles of 60° in each case and with the other two juxtaposed included angles of 120° in each case.

5. Honeycomb according to Claim 1, in which the prismatic honeycomb segments have an outer cross-section of a quadrilateral with two juxtaposed included angles of 90° in each case and with two included angles, opposite to these two angles, of 120° and of 60°.

6. Honeycomb according to Claim 1, in which the prismatic honeycomb segments have an outer cross-section of an equilateral parallelogram or of a trapezium with a base a, which possesses double the length of the other 3 sides, or of a trapezium with a base a, which possesses double the length of the opposite side c.

7. Honeycomb according to Claim 1, in which the corners of the outer cross-section of the prismatic honeycomb segments are rounded.

8. Honeycomb according to Claim 7, in which the radii of the corners of the outer cross-section amount to 1 to 5 mm.

9. Honeycomb according to Claim 1, in which the cross-section of the inner space of the prismatic honeycomb segments is different from the outer cross-section of the prismatic honeycomb segments.

10. Honeycomb according to Claim 1, in which the cross-section of the inner space of the prismatic honeycomb segments is round, quadrilateral, square, triangular or hexagonal and/or has a corrugated structure.

11. Honeycomb according to Claim 1, in which the cross-section of the inner space of all the prismatic honeycomb segments of the honeycomb is identical and/or of identical size.

12. Honeycomb according to Claim 1, in which the cross-section of the inner space of the prismatic honeycomb segments of the honeycomb is different and/or of different size.

13. Honeycomb according to Claim 1, in which the cross-section of the inner space of the prismatic honeycomb segments of the honeycomb is alternately different and/or of different size.

14. Honeycomb according to Claim 1, in which the cross-section of the inner space of the prismatic honeycomb segments of the honeycomb is triangular and of identical size.

15. Honeycomb according to Claim 1, in which the inner space of the prismatic honeycomb segments is subdivided by means of webs.

16. Honeycomb according to Claim 15, in which the webs in the inner space of the prismatic honeycomb segments are arranged in regular geometric patterns over the cross-section.

17. Honeycomb according to Claim 15, in which the webs in the inner space of the honeycomb segments run over the entire length of the honeycomb segments.

18. Honeycomb according to Claim 15, in which the webs in the inner space of the honeycomb segments form ducts over the entire length of the honeycomb segments.

19. Honeycomb according to Claim 18, in which the ducts have a triangular and/or square and/or rectangular cross-section.

20. Honeycomb according to Claim 18, in which the ducts formed by the webs in the inner space of the honeycomb segments are closed alternately at their ends, and, in the honeycomb segment, in each case ducts are always arranged next to one another, in which the closed end is arranged in each case at the other end of the honeycomb, so that, at one end of the honeycomb, there is in each case an alternate closure of the ends of the juxtaposed ducts of the honeycomb segment.

21. Honeycomb according to Claim 1, in which the convex outer cross-section of the entire honeycomb is a symmetrical or prolate hexagon or rectangle.

22. Honeycomb according to Claim 21, in which, to achieve a rectangular outer cross-section of the entire honeycomb, honeycomb segments having an outer cross-section of a quadrilateral with two juxtaposed included angles of 90° in each case and with two included angles, opposite to these two angles, of 120° and of 60° are used.

23. Honeycomb according to Claim 1, in which at least the outer wall of the honeycomb segments has a rough surface structure.

24. Honeycomb according to Claim 23, in which the outer wall of the honeycomb segments has a rougher surface than the inner wall of the honeycomb segments.

25. Honeycomb according to Claim 23, in which the outer wall of the honeycomb segments has fixing grooves over the length of the honeycomb segments.

26. Honeycomb according to Claim 23, in which only the touching faces of the honeycomb segments have surface structures.

27. Honeycomb according to Claim 1, in which those outer side faces of the honeycomb segments which are connected to one another in a materially integral manner are connected in a materially integral manner by means of an adhesive.

28. Honeycomb according to Claim 1, in which the honeycomb segments are composed entirely or partially of ceramic and/or metallic materials.

29. Honeycomb according to Claim 28, in which the honeycomb segments are composed of Al2O3, cordierite, mullite, titanium oxide, aluminium titanate, silicon carbide, silicon-silicon carbide, silicon nitride or aluminium nitride or of mixtures of these ceramics or of their mixed ceramics.

30. Honeycomb according to Claim 28, in which the honeycomb segments are composed of sintered steel.

31. Honeycomb according to Claim 1, in which the adhesive is composed of inorganic constituents and of a ceramic filler and of a binder.

32. Honeycomb according to Claim 31, in which ceramic powders or ceramic powders and ceramic fibres are present as ceramic fillers.

33. Honeycomb according to Claim 32, in which the ceramic powder is the same material which forms the walls of the honeycomb segments.

34. Honeycomb according to Claim 31, in which hydraulic binders are used as binders.

35. Honeycomb according to Claim 31, in which calcium aluminates, aluminium phosphates, sodium silicates (water glass), silica sols and/or curable resins are present as binders.

36. Honeycomb according to Claim 1, in which the entire surface of one or more honeycomb segments or parts thereof is coated with catalyst material composed of noble metals, doped titanium oxides and/or zeolites.

37. Honeycomb according to Claim 1, in which the entire surface of one or more honeycomb segments or parts thereof is coated with adsorbents composed of activated charcoal, zeolites and/or lithium silicates.

38. Honeycomb according to Claim 1, in which, after the composition of the honeycomb, the convex outer contour of the honeycomb is treated mechanically and/or chemically in order to modify the outer cross-section of the honeycomb.

39. Honeycomb according to Claim 38, in which a round or oval outer cross-section of the composite honeycomb is present.

40. Honeycomb according to Claim 1, in which the composite honeycomb is braced and/or sheathed mechanically.

## Revendications

1. Corps en nid d'abeilles composé, constitué d'au moins deux segments de corps en nid d'abeilles prismatiques, la section transversale extérieure d'un segment de corps en nid d'abeilles, perpendiculairement à la direction d'écoulement étant un quadrilatère avec des angles inclus de 60° et de 120° ou de 60° et de 90° et de 120°, avec des écarts des degrés angulaires de 3° au maximum dans chaque cas, et au moins à chaque fois une surface latérale extérieure des segments de corps en nid d'abeilles prismatiques à l'intérieur du corps en nid d'abeilles composé venant en majeure partie en contact sur toute leur longueur et parallèlement à la direction d'écoulement ou étant connectées les unes aux autres par engagement par liaison de matière, et dans la section transversale du corps en nid d'abeilles composé, les coins de la section transversale extérieure de segments de corps en nid d'abeilles prismatiques se rejoignant sous forme de prolongement de leurs côtés au moins au niveau de deux, et au plus au niveau de cinq points ou étant connectés les uns aux autre par engagement par liaison de matière, et le corps en nid d'abeilles composé présentant dans l'ensemble une géométrie extérieure convexe avec une section transversale extérieure dans l'ensemble convexe.

2. Corps en nid d'abeilles selon la revendication 1, dans lequel tous les segments de corps en nid d'abeilles prismatiques utilisés présentent la même section transversale extérieure.

3. Corps en nid d'abeilles selon la revendication 1, dans lequel les segments de corps en nid d'abeilles prismatiques présentent une section transversale extérieure d'un quadrilatère ayant deux angles inclus opposés de 60° dans chaque cas, et les deux autres angles inclus opposés de 120° dans chaque cas.

4. Corps en nid d'abeilles selon la revendication 1, dans lequel les segments de corps en nid d'abeilles prismatiques présentent une section transversale extérieure d'un quadrilatère ayant deux angles inclus adjacents de 60° dans chaque cas et les deux autres angles inclus adjacents de 120° dans chaque cas.

5. Corps en nid d'abeilles selon la revendication 1, dans lequel les segments de corps en nid d'abeilles prismatiques présentent une section transversale extérieure d'un quadrilatère ayant deux angles inclus adjacents de 90° dans chaque cas et deux angles inclus opposés à ces deux angles de 120° et de 60°.

6. Corps en nid d'abeilles selon la revendication 1, dans lequel les segments de corps en nid d'abeilles prismatiques présentent une section transversale extérieure d'un parallélogramme équilatéral ou d'un trapèze de base a, qui possède deux fois la longueur des trois autres côtés, ou d'un trapèze de base a, qui possède deux fois la longueur du côté opposé c.

7. Corps en nid d'abeilles selon la revendication 1, dans lequel les coins de la section transversale extérieure des segments de corps en nid d'abeilles prismatiques sont arrondis.

8. Corps en nid d'abeilles selon la revendication 7, dans lequel les rayons des coins de la section transversale extérieure valent de 1 à 5 mm.

9. Corps en nid d'abeilles selon la revendication 1, dans lequel la section transversale de l'espace interne des segments de corps en nid d'abeilles prismatiques est différente de la section transversale extérieure des segments de corps en nid d'abeilles prismatiques.

10. Corps en nid d'abeilles selon la revendication 1, dans lequel la section transversale de l'espace interne des segments de corps en nid d'abeilles prismatiques est ronde, polygonale, quadratique, triangulaire, hexagonale et/ou présente une structure ondulée.

11. Corps en nid d'abeilles selon la revendication 1, dans lequel la section transversale de l'espace interne de tous les segments de corps en nid d'abeilles prismatiques du corps en nid d'abeilles est identique et/ou de même taille.

12. Corps en nid d'abeilles selon la revendication 1, dans lequel la section transversale de l'espace interne des segments de corps en nid d'abeilles prismatiques du corps en nid d'abeilles est différente et/ou est de taille différente.

13. Corps en nid d'abeilles selon la revendication 1, dans lequel la section transversale de l'espace interne des segments de corps en nid d'abeilles prismatiques du corps en nid d'abeilles est mutuellement différente et/ou est de taille différente.

14. Corps en nid d'abeilles selon la revendication 1, dans lequel la section transversale de l'espace interne des segments de corps en nid d'abeilles prismatiques du corps en nid d'abeilles est triangulaire et de même taille.

15. Corps en nid d'abeilles selon la revendication 1, dans lequel l'espace interne des segments de corps en nid d'abeilles prismatiques est divisé par des nervures.

16. Corps en nid d'abeilles selon la revendication 15, dans lequel les nervures dans l'espace interne des segments de corps en nid d'abeilles prismatiques sont disposées suivant des motifs géométriques réguliers sur la section transversale.

17. Corps en nid d'abeilles selon la revendication 15, dans lequel les nervures dans l'espace interne des segments de corps en nid d'abeilles s'étendent sur toute la longueur des segments de corps en nid d'abeilles.

18. Corps en nid d'abeilles selon la revendication 15, dans lequel les nervures dans l'espace interne des segments de corps en nid d'abeilles forment des canaux sur toute la longueur des segments de corps en nid d'abeilles.

19. Corps en nid d'abeilles selon la revendication 18, dans lequel les canaux ont une section transversale triangulaire et/ou quadratique et/ou rectangulaire.

20. Corps en nid d'abeilles 18, dans lequel les canaux formés par les nervures dans l'espace interne des segments de corps en nid d'abeilles sont fermés mutuellement au niveau de leurs extrémités et des canaux sont toujours à chaque fois disposés les uns à côté des autres dans le segment de corps en nid d'abeilles, au niveau desquels l'extrémité fermée est à chaque fois disposée à l'autre extrémité du corps en nid d'abeilles, de telle sorte qu'une fermeture mutuelle des extrémités des canaux adjacents du segment de corps en nid d'abeilles soit réalisée au niveau d'une extrémité respective du corps en nid d'abeilles.

21. Corps en nid d'abeilles selon la revendication 1, dans lequel la section transversale convexe extérieure de l'ensemble du corps en nid d'abeilles est un hexagone symétrique ou allongé ou un rectangle.

22. Corps en nid d'abeilles selon la revendication 21, dans lequel, pour obtenir une section transversale extérieure rectangulaire de l'ensemble du corps en nid d'abeilles, on utilise des segments de corps en nid d'abeilles ayant une section transversale extérieure d'un quadrilatère ayant deux angles inclus adjacents de 90° à chaque fois et deux angles inclus opposés à ces deux angles de 120° et de 60°.

23. Corps en nid d'abeilles selon la revendication 1, dans lequel au moins la paroi extérieure des segments de corps en nid d'abeilles présente une structure de surface rugueuse.

24. Corps en nid d'abeilles selon la revendication 23, dans lequel la paroi extérieure des segments de corps en nid d'abeilles présente une surface plus rugueuse que la paroi intérieure des segments de corps en nid d'abeilles.

25. Corps en nid d'abeilles selon la revendication 23, dans lequel la paroi extérieure des segments de corps en nid d'abeilles présente des gorges de fixation sur la longueur des segments de corps en nid d'abeilles.

26. Corps en nid d'abeilles selon la revendication 23, dans lequel seulement les surfaces de contact des segments de corps en nid d'abeilles présentent des structures de surface.

27. Corps en nid d'abeilles selon la revendication 1, dans lequel les surfaces latérales extérieures des segments de corps en nid d'abeilles qui sont connectées les unes aux autres par engagement par liaison de matière, sont connectées par engagement par liaison de matière par un adhésif.

28. Corps en nid d'abeilles selon la revendication 1, dans lequel les segments de corps en nid d'abeilles se composent complètement ou partiellement de matériaux céramiques et/ou métalliques.

29. Corps en nid d'abeilles selon la revendication 28, dans lequel les segments de corps en nid d'abeilles se composent d'A1203, de cordiérite, de mullite, d'oxyde de titane, de titanate d'aluminium, de carbure de silicium, de carbure de silicium-silicium, de nitrure de silicium, de nitrure d'aluminium ou de mélanges de ces céramiques ou de leurs céramiques mixtes.

30. Corps en nid d'abeilles selon la revendication 28, dans lequel les segments de corps en nid d'abeilles se composent d'acier fritté.

31. Corps en nid d'abeilles selon la revendication 1, dans lequel l'adhésif se compose de constituants
inorganiques et d'une charge céramique et d'un liant.

32. Corps en nid d'abeilles selon la revendication 31, dans lequel de la poudre céramique ou de la poudre céramique et des fibres céramiques sont prévues en tant que charges céramiques.

33. Corps en nid d'abeilles selon la revendication 32, dans lequel la poudre céramique est le même matériau qui forme les parois des segments de corps en nid d'abeilles.

34. Corps en nid d'abeilles selon la revendication 31, dans lequel des liants hydrauliques sont utilisés en tant que liants.

35. Corps en nid d'abeilles selon la revendication 31, dans lequel des aluminates de Ca, des phosphates d'aluminium, des silicates de sodium (verre liquide), des sols de silice et/ou des résines durcissables sont prévus en tant que liants.

36. Corps en nid d'abeilles selon la revendication 1, dans lequel l'ensemble de la surface d'un ou de plusieurs segments de corps en nid d'abeilles ou parties de ceux-ci est revêtue de matériau catalyseur constitué de métaux nobles, d'oxydes de titane dopés et/ou de zéolithes.

37. Corps en nid d'abeilles selon la revendication 1, dans lequel l'ensemble de la surface d'un ou de plusieurs segments de corps en nid d'abeilles ou de parties de ceux-ci est revêtue d'agents absorbants constitués de charbon actif, de zéolithes et/ou de silicates de lithium.

38. Corps en nid d'abeilles selon la revendication 1, dans lequel le contour extérieur convexe du corps de nid d'abeilles après l'assemblage du corps en nid d'abeilles est traité mécaniquement et/ou chimiquement pour modifier la section transversale extérieure du corps en nid d'abeilles.

39. Corps en nid d'abeilles selon la revendication 38, dans lequel une section transversale extérieure ronde ou ovale du corps en nid d'abeilles composé est prévue.

40. Corps en nid d'abeilles selon la revendication 1, dans lequel le corps en nid d'abeilles composé est serré et/ou enveloppé mécaniquement.
